# EUROPÄISCHE PATENTSCHRIFT

(11) **EP 1 215 095 B1**
(45) Veröffentlichungstag und Bekanntmachung des Hinweises auf die Patenterteilung: **01.03.2006**
(21) Anmeldenummer: 01128936.0
(22) Anmeldetag: 05.12.2001
(51) Int. Cl.: B60S 1/04, B60S 1/58, B60S 1/34

(54) **Versenkbarer Wischer für eine Verschlussklappe eines Kraftfahrzeugs**
Retractable wiper for a vehicle liftgate
Essuie-glace escamotable pour un hayon de véhicule

(30) Priorität: 12.12.2000 DE 10061690; 02.08.2001 DE 10137845
(43) Veröffentlichungstag der Anmeldung: 19.06.2002
(73) Patentinhaber: DURA Automotive Plettenberg Entwicklungs- und Vertriebs GmbH, 58840 Plettenberg (DE)
(72) Erfinder: Heuel, Gerhard, 57482 Wenden (DE); Tillmann, Peter, 58840 Plettenberg (DE)
(74) Vertreter: Zinnecker, Armin

(56) Entgegenhaltungen:
- DE-A- 19 908 252
- FR-A- 2 724 616
- US-A- 3 505 702
- PATENT ABSTRACTS OF JAPAN vol. 1995, no. 04, 31. Mai 1995 (1995-05-31) -& JP 07 009946 A (JOHNAN SEISAKUSHO CO LTD;OTHERS: 01), 13. Januar 1995 (1995-01-13)
- PATENT ABSTRACTS OF JAPAN vol. 010, no. 216 (M-502), 29. Juli 1986 (1986-07-29) -& JP 61 054347 A (YAMAHA MOTOR CO LTD), 18. März 1986 (1986-03-18)
- PATENT ABSTRACTS OF JAPAN vol. 2000, no. 06, 22. September 2000 (2000-09-22) -& JP 2000 085544 A (MITSUBA CORP), 28. März 2000 (2000-03-28)

## Beschreibung

Die Erfindung betrifft eine Verschlußklappe für ein Kraftfahrzeug mit einem versenkbaren Wischer bzw. Scheibenwischer.

Ein Wischer bzw. Scheibenwischer eines Kraftfahrzeugs besteht üblicherweise aus einem Wischarm, an dem ein Wischblatt montiert ist, und einem Wischermotor, üblicherweise einem E-Motor (Elektromotor), durch den der Wischarm in eine hin- und hergehende Drehbewegung versetzbar ist.

Aus der US-A-3 505 702 ist ein Scheibenwischer für die Verschlußklappe eines Kraftfahrzeugs bekannt, der in eine hin- und hergehende Bewegung versetzbar ist. Femer kann der Scheibenwischer in eine versenkte Ruhestellung verschwenkt werden.

Die FR-A-2 724 616 offenbart einen Scheibenwischer für die Heckscheibe eines Kraftfahrzeugs, der in eine alternierende Drehbewegung versetzbar ist.

Die DE 36 36 439 offenbart eine einziehbare Wischervorrichtung zum Wischen der Windschutzscheibe eines Fahrzeugs, die einen Wischarm aufweist, an dem ein Wischblatt vorgesehen ist. Der Wischer ist über gelenkige Zwischenstücke mit zwei Hebeln verbunden, von denen einer durch eine Motorhauptwelle antreibbar ist. Der andere Hebel, der mit einem Zwischenstück gelenkig verbunden ist, ist gegenüber dem ersten Hebel in zwei verschiedenen Winkelstellungen verrastbar. Beim normalen Wischerbetrieb wird der erste Hebel in eine Drehbewegung versetzt. Nach dem Ende des Wischvorgangs wird der erste Hebel in entgegengesetzter Drehrichtung bewegt. Dadurch nimmt der zweite Hebel gegenüber dem ersten Hebel eine gestreckte Stellung ein, so daß der Wischarm in eine zurückgezogene bzw. verborgene Position zurückgezogen wird, in der er unter der Motorhaube verschwinden kann.

Aus der DE 41 04 632 A1 ist eine Scheibenwischanlage für ein Kraftfahrzeug bekannt, bei der die Scheibenwischer von einem Antriebsgestänge bewegt werden. Ein Kurbeltrieb treibt eine erste Schubstange an, die gelenkig mit einer Koppel verbunden ist, an der eine erste Schwinge angelenkt ist, die starr mit einer ersten Wischerwelle verbunden ist. Femer ist die erste Schwinge über eine weitere Koppel mit einer zweiten Schwinge verbunden, die starr mit einer zweiten Wischerwelle verbunden ist. An die Verbindungsstelle zwischen der Schubstange und der Koppel ist eine Schwinge einer Verstelleinrichtung angelenkt, deren anderes Ende mit dem exzentrischen Kurbelzapfen einer Kurbel verbunden ist. Durch die Verstelleinrichtung kann der Abstand zwischen den Kurbelzapfen am Kurbeltrieb und dem Anlenkpunkt der Koppel an der ersten Schwinge verändert werden, wodurch die Scheibenwischer aus dem normalen Wischfeld heraus in eine versenkte Parkstellung unterhalb der Windschutzscheibe überführt bzw. abgesenkt werden können.

Bei den bekannten Ausführungsformen kann die unter der Motorhaube angeordnete Mechanik, die das Zurückziehen des Scheibenwischers um ein kleines Stück in die versenkte Stellung ermöglicht, leicht in dem Motorraum untergebracht werden. Es ist allerdings nicht möglich, die vorbekannten Lösungen in eine Verschlußklappe eines Kraftfahrzeugs einzubauen.

Aufgabe der Erfindung ist es, einen versenkbaren Wischer für eine Verschlußklappe eines Kraftfahrzeugs vorzuschlagen.

Erfindungsgemäß wird diese Aufgabe durch die kennzeichnenden Merkmale des Anspruchs 1 gelöst. An dem Wischer ist ein Mitnehmer vorgesehen, der in einer Führungsschiene der Verschlußklappe geführt ist. Der Mitnehemr ist in eine obere Endstellung bringbar, in der der Wischer in eine alternierende Drehbewegung versetzbar ist. Ferner ist der Mitnehmer in eine untere Endstellung bringbar, in der der Wischer vollständig in der Führungsschiene versenkt ist. Bei der Verschlußklappe kann es sich um eine Heckklappe handeln, die als Schwingtür oder Flügeltür ausgebildet sein kann. Die Führungsschiene ist derart ausgestaltet und/oder dimensioniert, daß der Wischer vollständig in die Führungsschiene einziehbar ist.

Vorteilhafte Weiterbildungen der Erfindung sind in den Unteransprüchen beschrieben.

Der Mitnehmer kann durch einen Motor, vorzugsweise einen E-Motor, antreibbar sein. Nach einer vorteilhaften Weiterbildung ist der Mitnehmer über einen Bowdenzug mit dem Motor bzw. E-Motor gekoppelt. Der Mitnehmer kann allerdings auch über eine Zahnradleiste mit dem Motor bzw. E-Motor gekoppelt sein. Auch andere Kopplungsarten sind möglich.

Nach einer weiteren vorteilhaften Weiterbildung ist der Wischerantrieb an der Verschlußklappe des Kraftfahrzeugs fest montiert. Er befindet sich an einem festen Punkt.

Eine weitere vorteilhafte Weiterbildung ist dadurch gekennzeichnet, daß der Wischer von dem Mitnehmer entkoppelbar und mit dem Wischerantrieb verbindbar ist. Wenn sich der Wischer in der versenkten Stellung befindet, ist er mit dem Mitnehmer, der ihn in diese Stellung gebracht hat, verbunden und von dem Wischerantrieb, der sich vorzugsweise an einem festen Punkt befindet, entkoppelt. Wenn der Wischer von dieser Ruhestellung in die Arbeitsstellung gebracht wird, wird er vorzugsweise kurz vor dem Erreichen der Arbeitsstellung von dem Mitnehmer entkoppelt und mit dem Wischerantrieb verbunden.

Die Erfindung betrifft ferner eine Verschlußklappe für ein Kraftfahrzeug, die durch einen erfindungsgemäßen versenkbaren Wischer gekennzeichnet ist.

Ausführungsbeispiele der Erfindung werden nachstehend anhand der beigefügten Zeichnung im einzelnen erläutert. In der Zeichnung zeigt
- Fig. 1: eine Heckklappe eines Kraftfahrzeugs in einer Ansicht von hinten,
- Fig. 2: einen Schnitt durch die Heckklappe gemäß Fig. 1,
- Fig. 3: einen Schnitt längs der Linie A-A in Fig. 2,
- Fig. 4: einen Schnitt längs der Linie B-B in Fig. 2,
- Fig. 5: den Wischer in geringfügig versenkter Stellung in einer der Fig. 2 entsprechenden Darstellung,
- Fig. 6 - 11: den Wischer in zunehmend abgesenkten Stellungen in den Fig. 2 und 5 entsprechenden Darstellungen,
- Fig. 12: den Wischer in der unteren Endstellung in einer den Fig. 2 und 5 - 11 entsprechenden Darstellung,
- Fig. 13: die in den vorangegangenen Figuren gezeigten Wischerstellungen,
- Fig. 14: eine zweite Ausführungsform einer Heckklappe eines Kraftfahrzeugs mit einem versenkbaren Wischer in einer Ansicht von hinten,
- Fig. 15: die Heckklappe gemäß Fig. 14 in einer Darstellung von der Seite,
- Fig. 16: einen Schnitt längs der Linie A-A in Fig. 14 und
- Fig. 17: einen Schnitt längs der Linie B-B in Fig. 14.

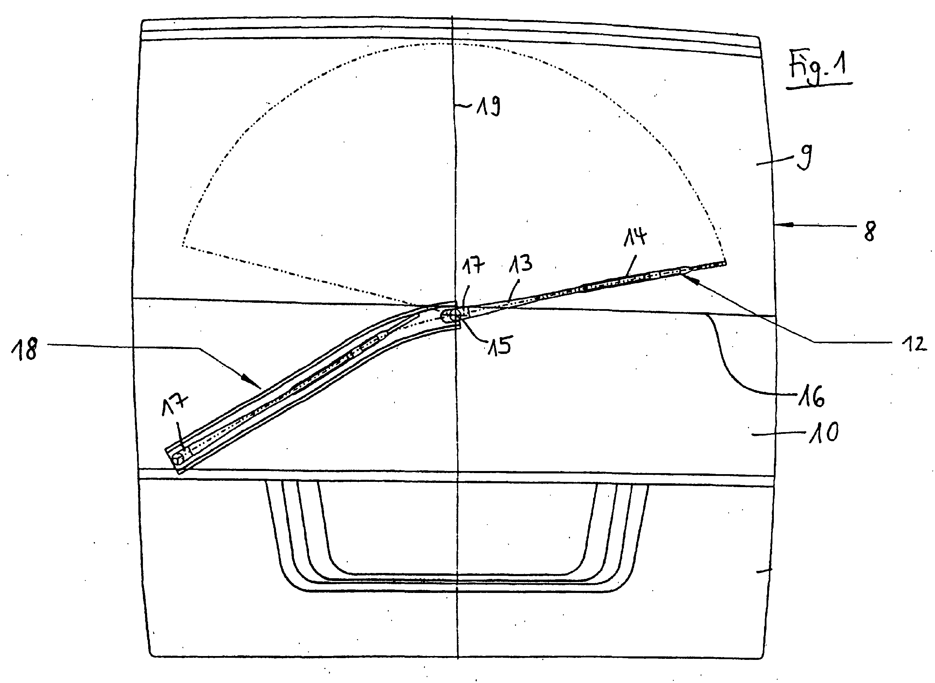

Die in Fig. 1 von hinten dargestellte Heckklappe 8 eines Kraftfahrzeugs besteht aus einer Scheibe 9 und einer Außenbeplankung 10. Die Scheibe 9 wird von dem Wischer 12 überstrichen, der einen Wischarm 13 umfaßt, an dem ein Wischblatt 14 angebracht ist. Die Drehachse 15 des Wischermotors ist etwas unterhalb der Trennlinie 16 zwischen der Scheibe 9 und der Außenbeplankung 10 angeordnet. Sie wird von der Außenbeplankung 10 verdeckt.

Der Wischer 12 weist einen Mitnehmer 17 auf, der in einer Zwangsführung 18 in der Heckklappe 8 geführt ist. Die Zwangsführung 18, die als Führungsschiene ausgestaltet ist, verläuft von der Mitte (Mittenachse) 19 der Heckklappe 8 in der aus Fig. 1 ersichtlichen Weise nach außen und unten bis in den (linken) äußeren unteren Endbereich der Außenbeplankung 10 der Heckklappe 8. Wenn sich der Mitnehmer 17 des Wischers 12 in der (linken) äußeren unteren Endstellung befindet, ist der Wischer vollständig in der Außenbeplankung 10 versenkt. In dieser Stellung liegt auch das obere Ende des Wischers 12 noch unterhalb der Trennlinie 16 zwischen Scheibe 9 und Außenbeplankung 10.

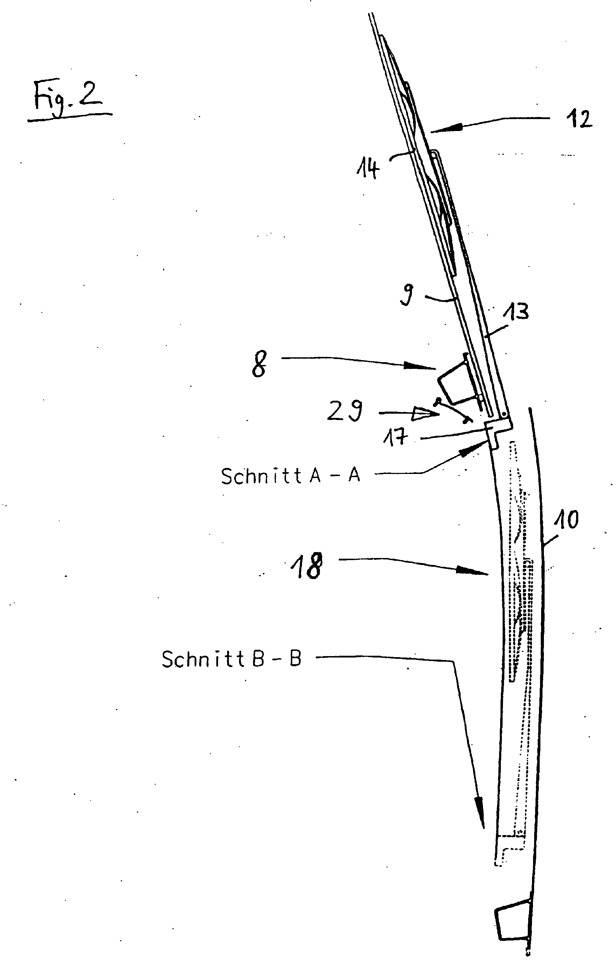

Fig. 2 zeigt einen Schnitt durch die in Fig. 1 dargestellte Heckklappe. Der Mitnehmer 17 befindet sich am oberen Ende der Führungsschiene 18. Die Führungsschiene 18 kann aus einem Stahl- oder Aluminium-Walzprofil oder aus einem Aluminium-Strangpreßprofil bestehen. Auch andere Ausführungsarten sind möglich.

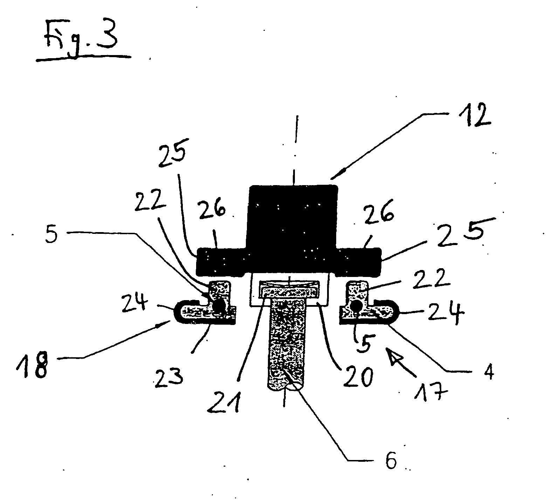

Fig. 3 zeigt einen Querschnitt durch die Führungsschiene längs der Linie A-A in Fig. 2. In der Darstellung der Fig. 3 befindet sich der Mitnehmer 17 in der oberen Endstellung, die in Fig. 2 durchgezogen gezeichnet ist. An dem Wischer 12 ist eine Aufnahme 20 vorgesehen, in die eine Antriebswelle 6 eingreift, die von einem Wischermotor in eine alternierende Drehbewegung versetzbar ist. Die Antriebswelle 6 weist an ihrem oberen Ende, mit dem sie in die Aufnahme 20 eingreift, einen im Durchmesser größeren Bund 21 auf, dessen obere Endfläche an einem federnden Element anliegt, durch das der von der Unterseite des Bundes 21 gebildete Anschlag gegen die Aufnahme 20 gedrückt wird.

Der Mitnehmer 17 besteht aus einem Basisteil 4, von dem zwei parallele, beabstandete Stifte 22 nach oben weisen. In dem Bereich, in dem die Stifte 22 an das Basisteil 4 angrenzen, ist ein Bowdenzug 5 mit dem Mitnehmer 17 verbunden.

Die Führung 18 besteht aus einem Basisteil 23, von dem seitliche Schenkel 24 um 180° unter Bildung halbkreisförmiger Querschnitte abgebogen sind. Die äußeren, abgerundeten Enden des Basisteils 4 des Mitnehmers 17 liegen innerhalb der dadurch gebildeten Führungen.

An dem Wischer 12 sind seitliche Verlängerungen 25 angebracht, in denen Durchgangslöcher 26 vorgesehen sind, die den Stiften 22 entsprechen. In der in Fig. 3 gezeigten Stellung ist der Wischer 12 von dem Mitnehmer 17 entkoppelt. Die Verlängerungen 25 sind von den Stiften 22 abgehoben. Ferner ist in dieser Stellung der Wischer 12 durch die Antriebswelle 6 mit dem Wischerantrieb verbunden.

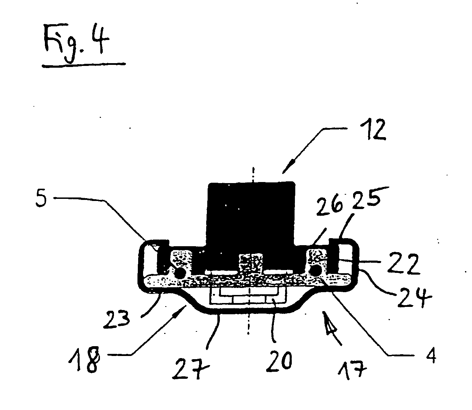

In Fig. 4 ist ein Schnitt längs der Linie B-B in Fig. 2 gezeigt. Hier befinden sich die Stifte 22 des Mitnehmers 17 in den Löchern 26 der Verlängerungen 25 des Wischers 12. Das Basisteil 23 der Führungsschiene 18 besitzt eine untere Ausweitung 27 für die Aufnahme 20. Die seitlichen Schenkel 24 übergreifen die äußeren Enden der Verlängerungen 25. In der in Fig. 4 gezeigten Stellung ist der Mitnehmer 17 mit dem Wischer 12 verbunden. Der durch die Bowdenzüge 5 bewirkte Antrieb des Mitnehmers 17 wird durch die in den Löchern 26 befindlichen Stifte 22 auf den Wischer 12 übertragen.

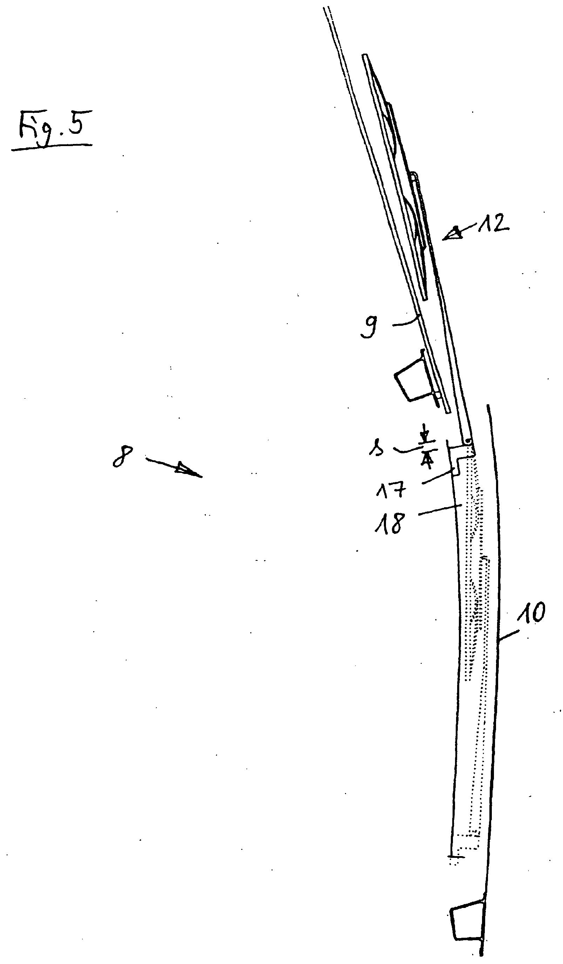

Fig. 5 zeigt den Wischer in einer geringfügig versenkten Stellung. Der Mitnehmer 17 ist bereits um einen Weg s in die Führungsschiene 18 eingezogen worden.

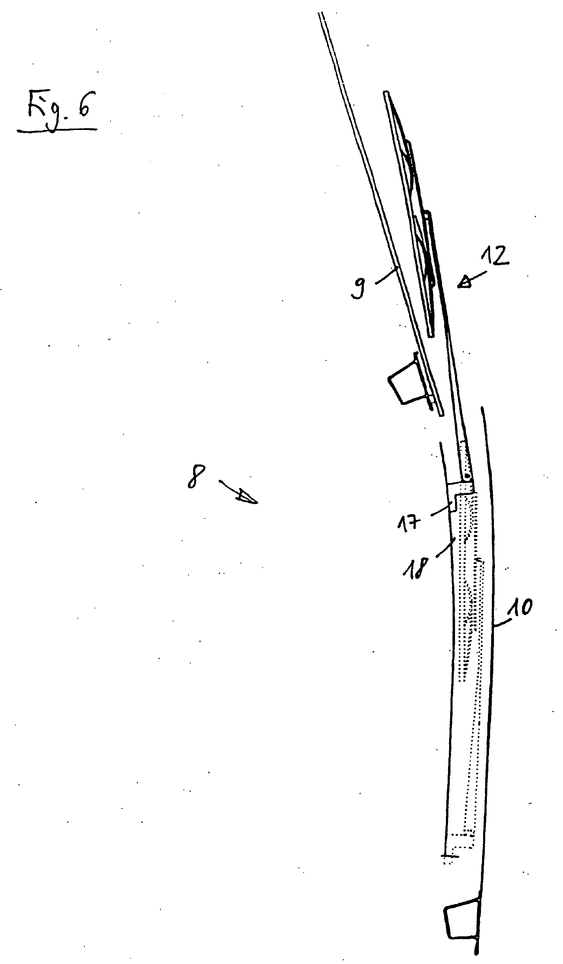

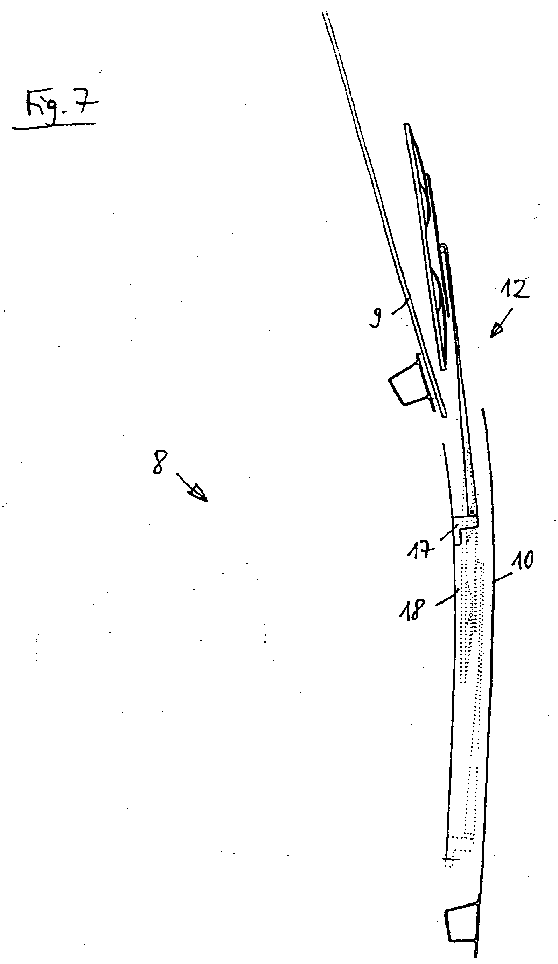

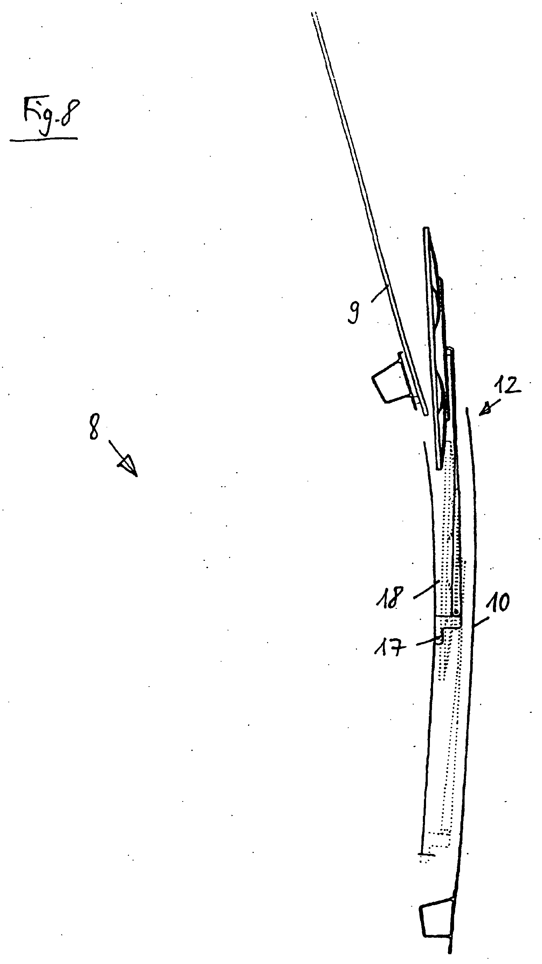

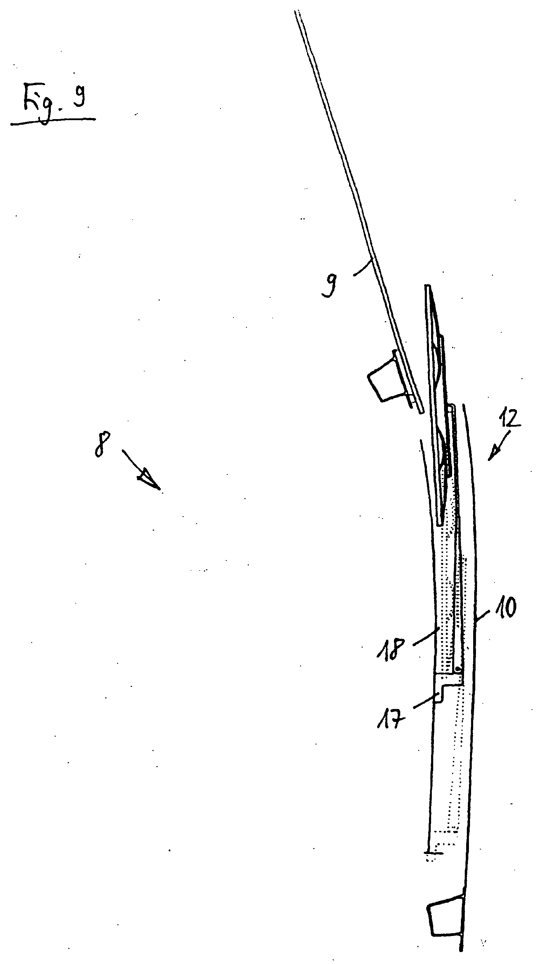

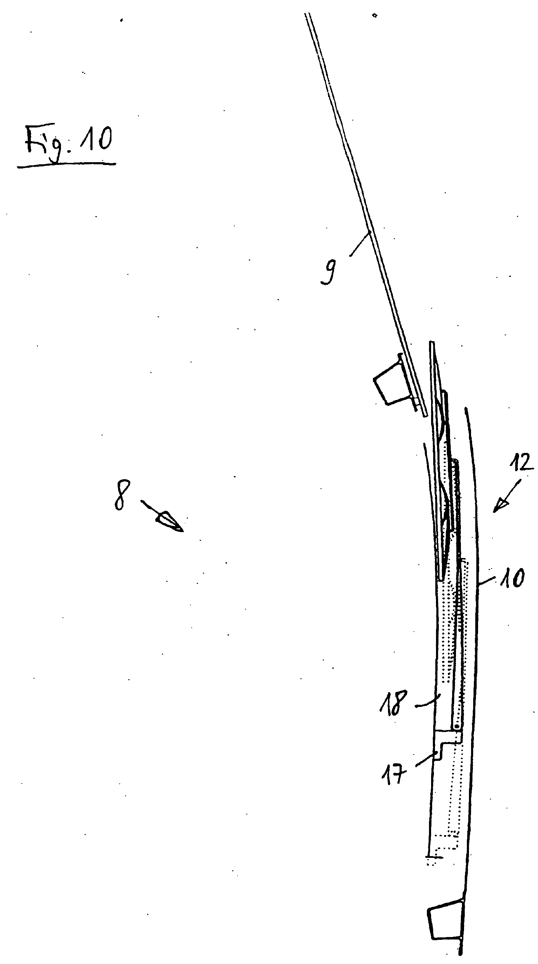

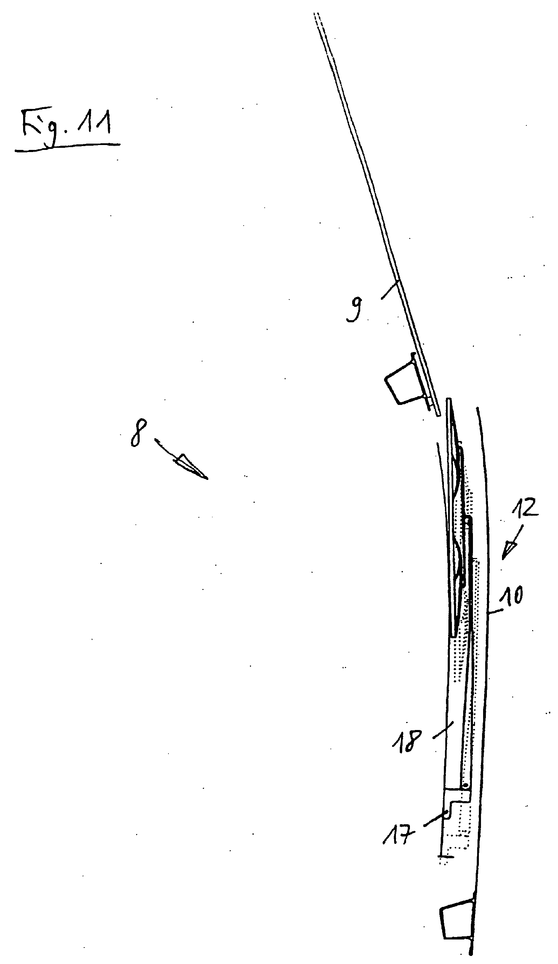

Die Figuren 6 bis 11 zeigen weitere Zwischenstellungen, in denen der Wischer 12 zunehmend in der Führung 18 versenkt ist.

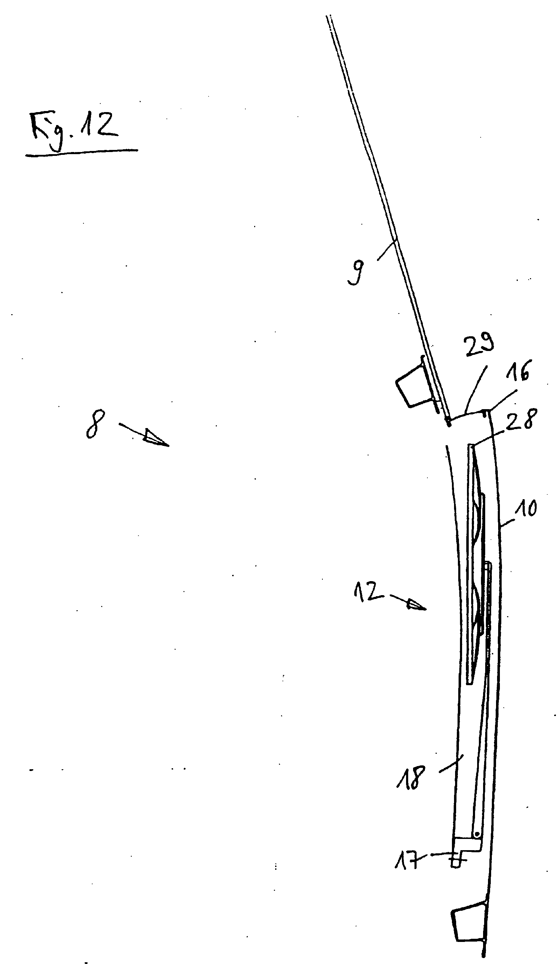

In der Fig. 12 ist die untere Endstellung gezeigt, in der der Wischer 12 vollständig in der Führung 18 versenkt ist. Auch das obere Ende 28 des Wischers 12 befindet sich unter der Trennlinie 16 und innerhalb der Führung 18. Der gesamte Wischer 12 wird von der Außenbeplankung 10 verdeckt. Das obere Ende der Führung 18 wird durch ein Abdeckelement 29 verschlossen.

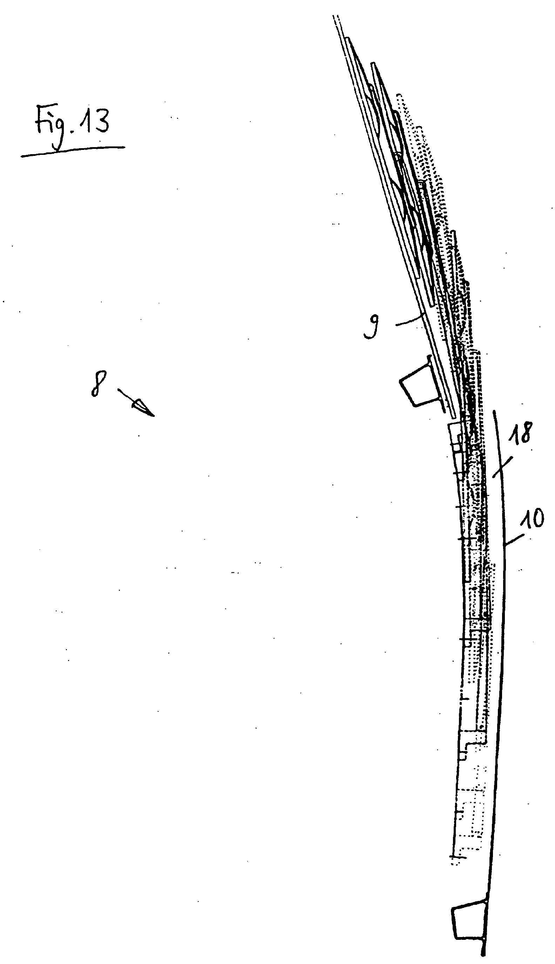

Die Figur 13 zeigt die obere und untere Endstellung des Wischers und einige Zwischenstellungen.

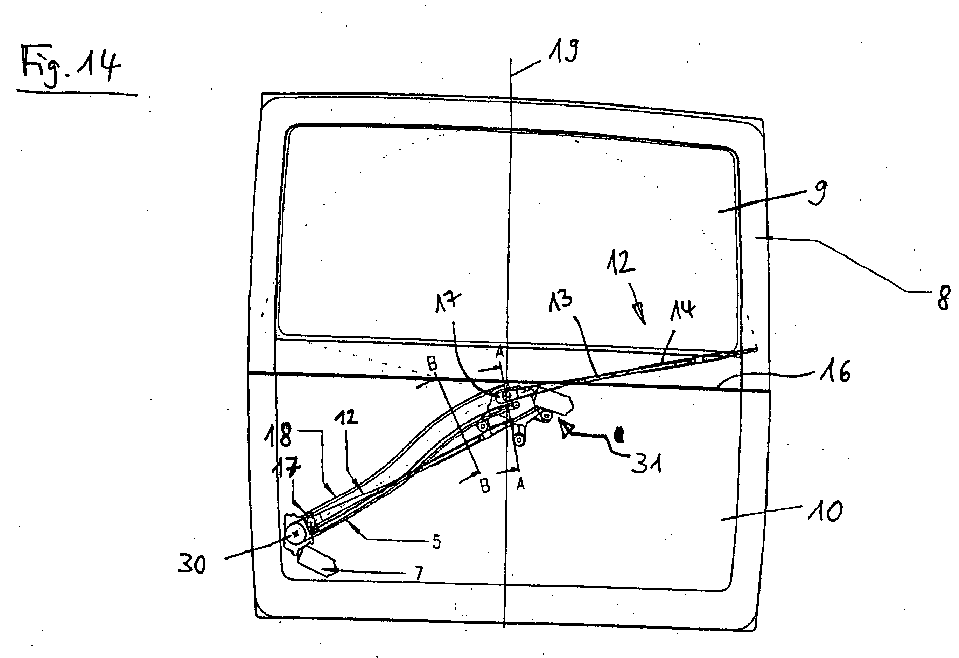

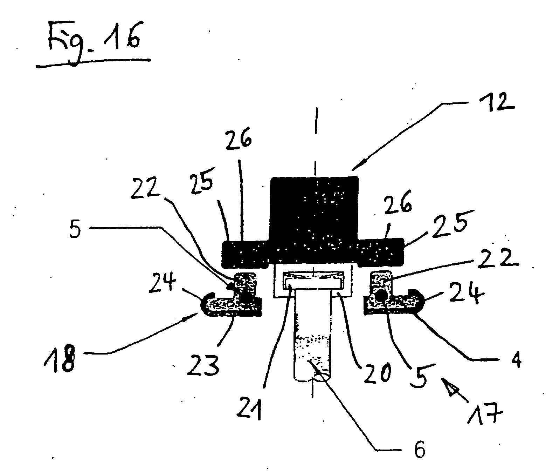

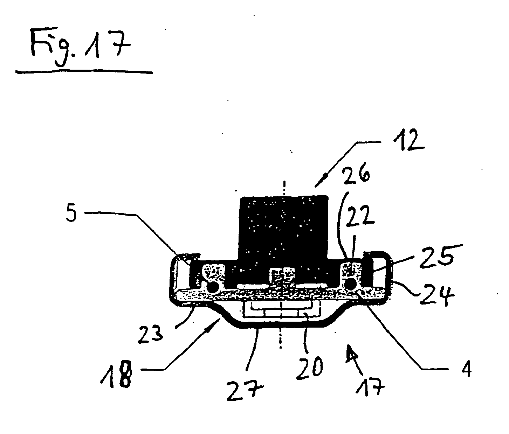

Bei der in den Figuren 14 bis 17 gezeigten, abgewandelten Ausführungsform sind mit der ersten Ausführungsform übereinstimmende Teile mit denselben Bezugszeichen versehen. Im (linken) äußeren unteren Bereich der Heckklappe 8 ist ein E-Motor 7 vorgesehen, der eine Scheibe 30 des Bowdenzugs 5 antreibt. Der Wischerantrieb ist mit dem Bezugszeichen 31 versehen. Er ist an einem festen Punkt der Heckklappe 8 montiert, und zwar unterhalb der Trennungslinie 16, so daß er von der Außenbeplankung 10 verdeckt wird.

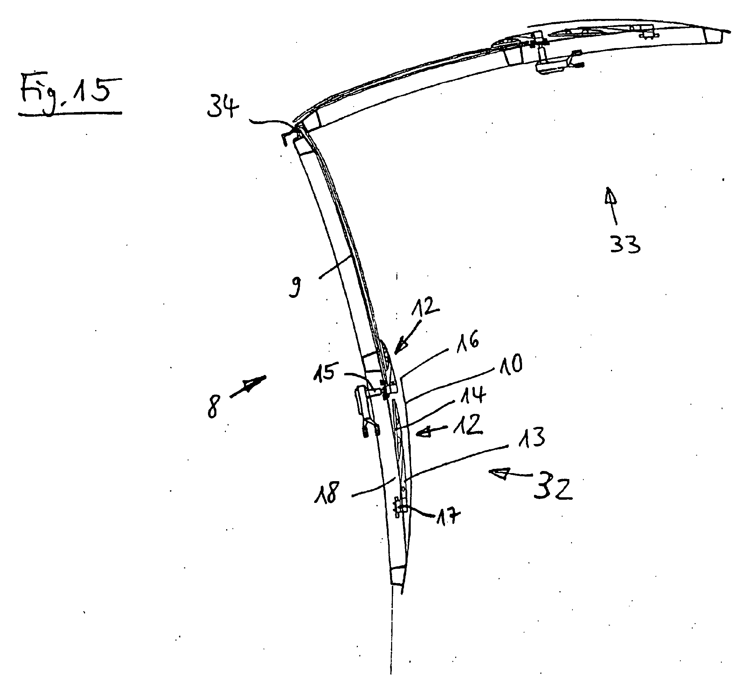

Fig. 15 zeigt die Heckklappe in der Schließstellung 32, die auch in Fig. 14 gezeigt ist, und in der Offenstellung 33, in der sie um eine horizontale, am oberen hinteren Ende des Kraftfahrzeugs liegende Achse 34 um etwa 90° nach oben verschwenkt ist.

Durch die Erfindung wird ein versenkbarer Wischer geschaffen, der durch die Versenkbarkeit bzw. Zurückziehbarkeit des Wischerarmes in einer Führungsschiene, gekennzeichnet ist. Besondere Vorteile ergeben sich bei der Anwendung in Verbindung mit einer Heckklappe, die als Schwingtür oder als Flügeltür ausgebildet ist. Zumindest der Hauptteil der Mechanik zum Versenken des Scheibenwischers ist an oder in der Verschlußklappe angeordnet. Durch die Erfindung wird ein versenkbarer Wischer für eine Heckklappe geschaffen, der über einen Mitnehmer in einer Führungsschiene, geführt ist. Der Mitnehmer ist über einen Bowdenzug oder eine sonstige Antriebs- und/oder Bewegungseinrichtung mit einem Motor, vorzugsweise einem E-Motor, gekoppelt. Der Wischerantrieb ist vorzugsweise an einem festen Punkt montiert. In der oberen Endstellung wird der Wischer von dem Mitnehmer entkoppelt und mit dem Wischerantrieb verbunden. Die Kopplung des Scheibenwischers mit dem Wischermotor erfolgt nur in der Endposition (Schnitt A-A). Wenn der Wischer wieder in die versenkte Ruhestellung fährt, erfolgt die Endkopplung sofort, nachdem der Mitnehmer von der Wischermotorachse herunterfährt (siehe Schnitt B-B).

## Patentansprüche

1. Verschlußklappe für ein Kraftfahrzeug mit einem versenkbaren Wischer, an dem ein Mitnehmer (17) vorgesehen ist, der zwischen zwei Endstellungen in einer Zwangsführung (18) der Verschlußklappe (8) geführt ist,
**dadurch gekennzeichnet,**
**daß** der Mitnehmer (17) in einer Führungsschiene (18) geführt ist, daß der Mitnehmer (17) in eine obere Endstellung bringbar ist, in der der Wischer (12) in eine alternierende Drehbewegung versetzbar ist, und daß der Mitnehmer (17) in eine untere Endstellung bringbar ist, in der der Wischer (12) vollständig in der Führungsschiene (18) versenkt ist.

2. Verschlußklappe nach Anspruch 1, **dadurch gekennzeichnet, daß** der Mitnehmer (17) durch einen Motor (7), vorzugsweise einen E-Motor, antreibbar ist.

3. Verschlußklappe nach Anspruch 2, **dadurch gekennzeichnet, daß** der Mitnehmer (17) über einen Bowdenzug (5) mit dem Motor (7) bzw. E-Motor gekoppelt ist.

4. Verschlußklappe nach Anspruch 3, **dadurch gekennzeichnet, daß** der Mitnehmer (17) über eine Zahnradleiste mit dem Motor (7) bzw. E-Motor gekoppelt ist.

5. Verschlußklappe nach einem der vorhergehenden Ansprüche, **dadurch gekennzeichnet, daß** der Wischerantrieb (31) an der Verschlußklappe (8) des Kraftfahrzeugs fest montiert ist.

6. Verschlußklappe nach einem der vorhergehenden Ansprüche, **dadurch gekennzeichnet, daß** der Wischer (12) von dem Mitnehmer (17) entkoppelbar und mit dem Wischerantrieb (6, 31) verbindbar ist.

## Claims

1. Vehicle lift gate with a retractable wiper, on which a driver (17) is provided, which driver is guided between two end positions in a constrained guide (18) of the lift gate (8), **characterized in that** the driver (17) is guided in a guide rail (18), **in that** the driver (17) can be brought into an upper end position, in which the wiper (12) can be set into an alternating rotational movement, and **in that** the driver (17) can be brought into a lower end position, in which the wiper (12) is completely retracted in the guide rail (18).

2. Lift gate according to Claim 1, **characterized in that** the driver (17) can be driven by a motor (7), preferably an electric motor.

3. Lift gate according to Claim 2, **characterized in that** the driver (17) is coupled to the motor (7) or electric motor via a Bowden cable (5).

4. Lift gate according to Claim 3, **characterized in that** the driver (17) is coupled to the motor (7) or electric motor via a toothed gear strip.

5. Lift gate according to one of the .preceding claims, **characterized in that** the wiper drive (31) is mounted fixedly on the lift gate (8) of the motor vehicle.

6. Lift gate according to one of the preceding claims, **characterized in that** the wiper (12) can be decoupled from the drive (17) and can be connected to the wiper drive (6, 31).

## Revendications

1. Volet de fermeture pour un véhicule automobile avec un essuie-glace escamotable, auquel est prévu un élément d'entraînement (17) qui est guidé entre deux positions d'extrémité dans un guidage forcé (18) du volet de fermeture (8),
**caractérisé**
**en ce que** l'élément d'entraînement (17) est guidé dans un rail de guidage (18), en ce que l'élément d'entraînement (17) peut être amené dans une position d'extrémité supérieure dans laquelle l'essuie-glace (12) peut être amené à effectuer un mouvement de rotation alternant, et en ce que l'élément d'entraînement (17) peut être amené dans une position d'extrémité inférieure dans laquelle l'essuie-glace (12) est noyé complètement dans le rail de guidage (18).

2. Volet de fermeture selon la revendication 1, **caractérisé en ce que** l'élément d'entraînement (17) peut être entraîné par un moteur (7), de préférence un moteur électrique.

3. Volet de fermeture selon la revendication 2, **caractérisé en ce que** l'élément d'entraînement (17) est couplé par un câble Bowden (5) avec le moteur (7) respectivement le moteur électrique.

4. Volet de fermeture selon la revendication 3, **caractérisé en ce que** l'élément d'entraînement (17) est couplé par une baguette à roue dentée avec le moteur (7) respectivement le moteur électrique.

5. Volet de fermeture selon l'une des revendications précédentes, **caractérisé en ce que** l'entraînement de l'essuie-glace (31) est monté fixement au volet de fermeture (8) du véhicule automobile.

6. Volet de fermeture selon l'une des revendications précédentes, **caractérisé en ce que** l'essuie-glace (12) peut être découplé de l'élément d'entraînement (17) et peut être relié à l'entraînement d'essuie-glace (6, 31).
